Europäisches Patentamt

European Patent Office

Office européen des brevets

(19)

(11) Veröffentlichungsnummer: **0 184 980**
**A2**

# (12) EUROPÄISCHE PATENTANMELDUNG

(21) Anmeldenummer: 85730168.3

(22) Anmeldetag: 13.12.85

(51) Int. Cl.⁴: **F 16 L 57/00,** F 16 L 58/10, B 32 B 1/08

(30) Priorität: 14.12.84 DE 3446340

(43) Veröffentlichungstag der Anmeldung: 18.06.86 Patentblatt 86/25

(84) Benannte Vertragsstaaten: **BE DE FR GB NL**

(71) Anmelder: **MANNESMANN Aktiengesellschaft, Mannesmannufer 2, D-4000 Düsseldorf 1 (DE)**

(72) Erfinder: **Stucke, Walter, Portmannweg 8, D-4030 Ratingen (DE)**

(74) Vertreter: **Meissner, Peter E., Dipl.-Ing. et al, Meissner & Meissner Patentanwälte Herbertstrasse 22, D-1000 Berlin 33 Grunewald (DE)**

(54) Verfahren zum Ummanteln von Stahlrohren mit einer mechanischen Schutzschicht.

(57) Die Erfindung betrifft ein Verfahren zum Ummanteln von Stahlrohren, die mit einer Korrosionsschutzbeschichtung, insbesondere einer Korrosionsschutzbeschichtung mit äusserer Polyäthylenschicht, versehen sind, mit einer aussen liegenden mechanischen Schutzschicht. Um ein Verfahren anzugeben, mit dem Stahlrohre, die bereits mit einer Korrosionsschutzbeschichtung versehen sind, mit einer aussen liegenden möglichst leichten mechanischen Schutzschicht ummantelt werden können, wobei diese eine Sicherung des Korrosionsschutzes bei mechanischen Einwirkungen, insbesondere durch scharfkantige Felsstücke bei der Rohrverlegung oder durch starke Verformung des Rohres, gewährleisten soll, wird vorgeschlagen, dass als Schutzschicht auf das Rohr ein hochelastischer vernetzter Kunststoff oder Kautschuk von mindestens 3 mm Schichtdicke aufgebracht wird.

Verfahren zum Ummanteln von Stahlrohren mit einer mechanischen
Schutzschicht

Die Erfindung betrifft ein Verfahren zum Ummanteln von Stahlrohren,
die mit einer Korrosionsschutzbeschichtung versehen sind, mit einer
außen liegenden mechanischen Schutzschicht.

Für die Korrosionsschutzbeschichtung kommen duroplastische oder
thermoplastische Kunststoffe oder auch Kombinationen beider Werkstoffgruppen in Frage (z.B. Epoxyharz, Polyäthylen). Eine Korrosionsschutzschicht kann beispielsweise in Form eines thermoplastischen Doppelschlauches, der aus einer inneren Kleberschicht aus
Äthylencopolymerisat und einer darüber liegenden Polyäthylenschicht
besteht, nach einem aus der DE-OS 19 57 078 bekannten Verfahren auf
ein erwärmtes Stahlrohr aufgebracht werden. Es ist auch bekannt,
eine derartige Korrosionsschutzbeschichtung durch eine darüber
gelegte äußere Mantelschicht vor mechanischer Beschädigung z.B.
beim Transport von Rohren, insbesondere jedoch bei der Verlegung
von Rohrleitungen z.B. in felsigen Böden zu schützen. Diese mechanische Schutzschicht kann beispielsweise aus einer zusätzlichen,
mehrere Millimeter dicken Polyäthylenschicht bestehen (Firmenbroschüre: Mannesmann Stahlrohre mit Kunststoffummantelung, 1964).
Auch die Verwendung von Bitumen oder Wollfilzpappe für diesen Zweck
ist seit Jahren bekannt.

Ferner ist aus der DE-OS 31 22 347 ein Verfahren zum Auftragen
einer mechanischen Schutzschicht durch Aufschleudern eines Gemisches aus einem zementhaltigen Material, polymeren Feststoffen
und zerhakten Fasern oder Flocken mittels rotierender Bürsten auf
ein mit einem Korrosionsschutz beschichtetes Rohr bekannt. Schließlich gehört es zum Stand der Technik, um das zu schützende Rohr
herum eine Kunststoffmatte als sogenannte Felsschutzmatte lose
herumzulegen.

Den bekannten Lösungen auf Basis Kunststoffe, Bitumen oder Wollfilzpappe haftet der Nachteil an, daß die Widerstandsfähigkeit der
mechanischen Schutzschicht aufgrund der verwendeten wenig schnittfesten Werkstoffe in manchen Fällen nicht ausreicht, um die Beschädigung der Korrosionsschutzschicht durch scharfkantige Felsstücke
beim Verlegen einer Rohrleitung zu vermeiden.

Die Lösungen auf der Basis zementhaltiger Materialien haben den Nachteil, daß sie nur eine vergleichsweise geringe Verformbarkeit aufweisen und z.B. durch Biegen beim Transport oder beim Verlegen zum Brechen und Abplatzen der mechanischen Schutzschicht führen können. Außerdem bringen sie den Nachteil mit sich, das Gewicht des Rohres außerordentlich stark erhöhen. Der elektrische Bodenwiderstand ist bei dieser Isolierart geringer als bei polyäthylenhaltigen Isoliersystemen. Schließlich kann es beim Biegen von Rohren auch zu Überdehnungen und zum Reißen der eigentlichen Korrosionsschutzbeschichtung (z.B. Epoxyharzschicht) kommen.

Aufgabe der Erfindung ist es, ein Verfahren anzugeben, mit dem Stahlrohre, die bereits mit einer Korrosionsschutzbeschichtung versehen sind, mit einer außen liegenden möglichst leichten mechanischen Schutzschicht ummantelt werden können, wobei diese eine Sicherung des Korrosionsschutzes bei mechanischen Einwirkungen, insbesondere durch scharfkantige Felsstücke bei der Rohrverlegung oder durch starke Verformung des Rohres, gewährleisten soll.

Gelöst wird diese Aufgabe erfindungsgemäß dadurch, daß auf das mit einer Korrosionsschutzbeschichtung versehene Stahlrohr eine Schutzschicht aus einem hochelastischen vernetzten Kunststoff oder Kautschuk von mindestens 3 mm, vorzugsweise mindestens 5 mm, Schichtdicke aufgebracht wird. Die Korrosionsschutzbeschichtung kann z.B. in einer Epoxyharzbeschichtung oder vorzugsweise aus einer 3-Schichtisolierung (Epoxyharz-Grundschicht, Äthylencopolymerisat-Kleberschicht, Polyäthylen-Deckschicht) bestehen. Diese Korrosionsschutzbeschichtung wird durch die erfindungsgemäße mechanische Schutzschicht vor Beschädigung bewahrt, da mechanische Einwirkungen elastisch aufgenommen und von der Korrosionsschutzbeschichtung abgehalten werden können. Um die mechanische Widerstandsfähigkeit der Beschichtung weiter zu erhöhen, empfiehlt es sich häufig, im Bereich der außen liegenden Oberfläche der Schutzschicht eine Verstärkung aus einem Fasermaterial einzuarbeiten und/oder Schaumstoff der gleichen Stoffgattung mit geschlossenen Zellen zusätzlich als selbständige Schicht mit aufzubringen.

Als geeigneter Grundwerkstoff für die mechanische Schutzschicht läßt sich Butylkautschuk verwenden, wobei dieser als Regenerat aus Autoreifen oder ähnlichem gewonnen werden kann und dadurch besonders preiswert zur Verfügung steht. Mit besonderem Vorteil lassen sich auch Werkstoffe auf Polyurethan-Basis, z.B. Vulkolan, einsetzen, die sich durch eine besonders große Schnittfestigkeit und gute Dämpfungseigenschaften auszeichnen.

Das Fasermaterial zur mechanischen Verstärkung wird vorteilhaft in Form eines Vlieses oder eines Gewebes in die Schutzschicht eingearbeitet. Es kann aber beispielsweise auch die Form eines Filaments aufweisen. Als Werkstoff für das Fasermaterial eignen sich organische Fasern wie z.B. Baumwolle, insbesondere aber Glasfasern, die sich durch besonders hohe Zugfestigkeit auszeichnen und auch die Schnittfestigkeit wesentlich erhöhen.

Um eine sichere Haftung der mechanischen Schutzschicht auf dem Rohr zu bewirken, empfiehlt sich ein Verkleben auf der Korrosionsschutzbeschichtung. Geeignete Kleber sind Äthylencopolymerisate, wie sie auch für die Verklebung der Polyäthylenschicht mit der Epoxyharzschicht bei der Korrosionsschutzbeschichtung verwendet werden, oder z.B. Äthylen-Vinylacetat-Copolymerisate oder Polyisobutylene. Aus Gründen der Energieeinsparung ist es besonders vorteilhaft, das Aufbringen und Verkleben der mechanischen Schutzschicht unmittelbar im Anschluß an das Verfahren zur Korrosionsschutzbeschichtung unter Ausnutzung einer Restwärme des Stahlrohres von etwa 70 °C durchzuführen. Die Kühlstrecke zur Abkühlung der korrosionsschutzbeschichteten Rohre muß also entsprechend gesteuert werden. Die Restwärme des Rohres bewirkt eine ausreichende Aktivierung des verwendeten Klebers und damit ein sicheres Verkleben der mechanischen Schutzschicht auf dem Rohr.

Hinsichtlich der Techniken zum Auftragen der mechanischen Schutzschicht sind prinzipiell die aus dem Bereich der Korrosionsschutzbeschichtung bekannten Verfahrensweisen möglich (z.B. Schlauchextrusionsverfahren).

In besonderer Weise eignet sich jedoch das Wickelverfahren, bei dem das Rohr, das mit anderen zu beschichtenden Rohren zu einem "unendlichen" Strang aneinandergereiht wird, durch spiralförmiges Umwickeln mit einem bandförmigen Ummantelungsmaterial in der Weise beschichtet wird, daß die Beschichtung eine geschlossene Oberfläche zeigt. Um dieses sicherzustellen, empfiehlt es sich, das Wickeln überlappt durchzuführen, wie es aus der Korrosionsschutzbeschichtung bekannt ist.

Das Ummantelungsmaterial kann in unterschiedlicher Weise für das Umwickeln bereitgestellt werden, z.B. durch Ziehen aus einer Ziehdüse oder durch Extrudieren aus einer Breitschlitzdüse zu einem flachen Folienstreifen. Insbesondere eignet sich jedoch das Schlauchextrusionsverfahren, wobei der extrudierte "endlose" Folienschlauch in Längsrichtung (z.B. mit einem beheizten Messer) aufgeschnitten und vor dem Umwickeln zu einem flachen Folienstreifen ausgebreitet wird. Um im Bedarfsfall das Fasermaterial in die Ummantelungsfolie einzuarbeiten, kann man die Schlauchfolie, bevor sie aufgeschlitzt wird, durch eine zylindrische Kammer laufen lassen, auf deren Innenwand ein ebenfalls endloses schlauchförmiges Fasermaterial hindurchgeführt wird. Während des Durchlaufs durch die Kammer wird das extrudierte Grundmaterial der mechanischen Schutzschicht, das sich noch im plastifizierten Zustand befindet, von innen gegen die Wand der Kammer gedrückt, so daß sich das Fasermaterial in das Grundmaterial eindrückt und sich mit diesem innig verbindet. Nach Verlassen der Kammer wird der so entstandene Verbundschlauch aufgeschnitten und zur Wickelfolie ausgebreitet. Um einen besonders wirksamen mechanischen Schutz zu erhalten, kann die Beschichtung auch in mehreren übereinanderliegenden Lagen erfolgen. Hierdurch läßt sich nicht nur die Schichtdicke beliebig variieren, sondern man erreicht dadurch auch, daß das verwendete Fasermaterial sich nicht nur im Oberflächenbereich der Beschichtung befindet, sondern sich auch über die gesamte Dicke der Beschichtung in mehreren Lagen verteilt.

Schließlich ist noch auf eine weitere Verfahrensvariante hinzuweisen, bei der zwischen die Korrosionsschutzbeschichtung und der eigentlichen mechanischen Schutzschicht eine zusätzliche Schicht aus einem geschäumten geschlossenzelligen Kunststoff eingebracht wird. Hierdurch wird die Fähigkeit des elastischen Ausweichens vor und des gleichzeitigen Aufnehmens von mechanischen Einwirkungen weiter gefördert. Infolge der zusätzlichen mechanischen Schutzbeschichtung ist es möglich, die Schichtdicke der eigentlichen Korrosionsschutzbeschichtung geringer als üblich einzustellen. Dadurch nimmt zwangsläufig auch die Gefahr zu, daß diese Beschichtung Fehlstellen aufweist oder durch äußere Einwirkung (z.B. Biegen) leichter beschädigt wird. Um dennoch einen vollwertigen Korrosionsschutz zu gewährleisten, wird erfindungsgemäß vorgeschlagen, in den geschlossenen Zellen der Schaumstoffschicht, die aufgeklebt sein sollte, ein Korrosionsschutzgas (z.B. aus Nitriten oder Carbamaten) stehen zu lassen, das beim Bruch der Zellenwand einen zusätzlichen Korrosionsschutz bewirkt.

Anhand des nachfolgenden Beispiels wird die Erfindung näher erläutert.

Ein Stahlrohr von 12 m Länge und einem Durchmesser von 200 mm wird zusammen mit weiteren Rohren gleicher Dimension in einer üblichen Anlage zunächst durch Stahlstrahlen gereinigt, auf etwa 200 °C erwärmt und mit Epoxyharz von 50 µm Schichtdicke beschichtet. Anschließend wird es in einem geschlossenen Rohrstrang durch eine weitere Beschichtungsstation geführt, in der es mit einem aus einem inneren Folienschlauch aus Äthylencopolymerisat und einem äußeren Folienschlauch aus Polyäthylen bestehenden Doppelschlauch nahtlos ummantelt wird. Die Schichtdicke des Äthylencopolymerisates beträgt etwa 150 µm, die des Polyäthylens etwa 2 mm. Das warme Rohr mit der ebenfalls noch warmen Korrosionsschutzbeschichtung durchläuft anschließend eine Kühlstrecke und wird auf 70 - 80 °C abgekühlt. Danach wird die Ummantelung der Rohre an den Stoßstellen aufgetrennt, so daß die Rohre wieder vereinzelt werden, und die Rohrenden werden vorschriftsmäßig abisoliert.

Die noch etwa 70 °C warmen Rohre werden dann wieder zu einem losen Rohrstrang aneinandergereiht und in eine Beschichtungsstation für die mechanische Schutzschicht eingefahren, die nach dem Wickelverfahren die in einer spiralförmigen Dreh- und Längsbewegung geförderten Rohre mit einem durch ein Glasfasergewebe verstärkten Folienstreifen aus Butylkautschuk in einer Schichtdicke von 5 mm ummantelt. Dieser Folienstreifen entsteht aus einer extrudierten Schlauchfolie, in deren Oberfläche zunächst das Glasfasergewebe als schlauchförmiges Material von außen eingearbeitet wird und die anschließend in Längsrichtung aufgeschnitten und in eine flache Form gebracht wird.

Gleichzeitig mit dem Umwickeln der Folie aus Butylkautschuk wird aus einer Breitschlitzdüse eine dünne Kleberfolie aus Äthylencopolymerisat extrudiert, die zwischen der Korrosionsschutzbeschichtung und der Butylkautschuk-Schicht mit eingewickelt wird und eine sichere Verklebung der mechanischen Schutzschicht auf dem Rohr bewirkt.

Die aufgebrachte mechanische Schutzschicht hält Schlagbelastungen und die Einwirkung scharfer oder kantiger Gegenstände sicher vom Rohr ab, so daß die Korrosionsschutzbeschichtung nicht beschädigt wird. Der besondere Vorteil des erfindungsgemäßen Verfahrens ist, daß die danach beschichteten Rohre wesentlich leichter sind als mit einer entsprechenden Zementummantelung versehene Rohre und problemlos gebogen werden können, ohne daß die mechanische Schutzschicht beschädigt wird und abzuplatzen droht. Bei Verklebung der mechanischen Schutzschicht auf einer 3-schichtigen Korrosionsschutzbeschichtung (Epoxyharz, Äthylencopolymerisat, Polyäthylen) ist es möglich, ohne die Korrosionsschutzeigenschaften des Gesamtsystems zu beeinträchtigen, die Schichtdicke der Polyäthylen-Deckschicht gegenüber den bisher üblichen Werten deutlich zu vermindern, z.B. von 2,5 auf 1,5 mm. Ein weiterer Vorteil ist, daß die mechanische Schutzschicht in gleicher Weise (z.B. durch Prägedruck) signiert werden kann wie eine Korrosionsschutzbeschichtung.

0184980

- 1 -

Patentansprüche:

1. Verfahren zum Ummanteln von Stahlrohren, die mit einer Korrosionsschutzbeschichtung, insbesondere einer Korrosionsschutzbeschichtung
mit äußerer Polyäthylenschicht, versehen sind, mit einer außen liegenden mechanischen Schutzschicht,
d a d u r c h   g e k e n n z e i c h n e t,
daß als Schutzschicht auf das Rohr ein hochelastischer vernetzter
Kunststoff oder Kautschuk von mindestens 3 mm Schichtdicke aufgebracht wird.

2. Verfahren nach Anspruch 1,
d a d u r c h   g e k e n n z e i c h n e t,
daß die Schutzschicht im Bereich ihrer außen liegenden Oberfläche
eine Verstärkung aus einem Fasermaterial aufweist.

- 2 -

3. Verfahren nach Anspruch 1 oder 2,
   d a d u r c h   g e k e n n z e i c h n e t ,
   daß für die Schutzschicht Butylkautschuk verwendet wird.

4. Verfahren nach Anspruch 3,
   d a d u r c h   g e k e n n z e i c h n e t ,
   daß als Schutzschicht ein Regenerat aus Autoreifen oder ähnlichem
   verwendet wird.

5. Verfahren nach Anspruch 1 oder 2,
   d a d u r c h   g e k e n n z e i c h n e t ,
   daß als Schutzschicht Polyurethan (z.B. Vulkolan) verwendet wird.

6. Verfahren nach einem der Ansprüche 2 - 5,
   d a d u r c h   g e k e n n z e i c h n e t ,
   daß als Fasermaterial ein Gewebe verwendet wird.

7. Verfahren nach einem der Ansprüche 2 - 5,
   d a d u r c h   g e k e n n z e i c h n e t ,
   daß als Fasermaterial ein Vlies verwendet wird.

8. Verfahren nach einem der Ansprüche 2 - 7,
   d a d u r c h   g e k e n n z e i c h n e t ,
   daß als Fasermaterial ein organisches Material verwendet wird.

9. Verfahren nach Anspruch 8,
   d a d u r c h   g e k e n n z e i c h n e t ,
   daß als Fasermaterial Baumwolle verwendet wird.

10. Verfahren nach einem der Ansprüche 2 - 7,
    d a d u r c h   g e k e n n z e i c h n e t ,
    daß als Fasermaterial Glas verwendet wird.

11. Verfahren nach einem der Ansprüche 1 - 10,
    d a d u r c h   g e k e n n z e i c h n e t ,
    daß die Schutzschicht mit einer Kleberschicht auf der Korrosionsschutzbeschichtung verklebt wird.

12. Verfahren nach Anspruch 11,
d a d u r c h   g e k e n n z e i c h n e t,
daß als Kleberschicht ein Äthylen-Copolymerisat verwendet wird.

13. Verfahren nach Anspruch 11,
d a d u r c h   g e k e n n z e i c h n e t,
daß als Kleberschicht ein Äthylen-Vinylacetat-Copolymerisat
verwendet wird.

14. Verfahren nach Anspruch 11,
d a d u r c h   g e k e n n z e i c h n e t,
daß als Kleberschicht Polyisobutylen verwendet wird.

15. Verfahren nach einem der Ansprüche 11 - 14,
d a d u r c h   g e k e n n z e i c h n e t,
daß das Aufkleben der Schutzschicht unmittelbar nach der Korrosionsschutzbeschichtung unter Ausnutzung einer Restwärme des Stahlrohres von etwa 70 °C aus dem Korrosionsschutzbeschichtungsprozeß
erfolgt.

16. Verfahren nach einem der Ansprüche 1 - 15,
d a d u r c h   g e k e n n z e i c h n e t,
daß die mechanische Schutzschicht in einer Dicke von mindestens
5 mm aufgetragen wird.

17. Verfahren nach einem der Ansprüche 1 - 16,
d a d u r c h   g e k e n n z e i c h n e t,
daß die Schutzschicht durch lückenloses spiralförmiges Umwickeln
des Stahlrohres mit einem bandförmigen Ummantelungsmaterial aufgebracht wird.

18. Verfahren nach Anspruch 17,
d a d u r c h   g e k e n n z e i c h n e t,
daß das Umwickeln überlappend ausgeführt wird.

19. Verfahren nach Anspruch 17 oder 18,
d a d u r c h   g e k e n n z e i c h n e t,
daß das Material für die Schutzschicht als endloser Schlauch extrudiert, in Längsrichtung aufgeschnitten und dann zu einer flachen Wickelfolie ausgebreitet wird.

20. Verfahren nach den Ansprüchen 2 und 19,
d a d u r c h   g e k e n n z e i c h n e t,
daß vor dem Aufschneiden des noch im plastifizierten Zustand befindlichen Schlauches in die Oberfläche des Schlauches das eine ebenfalls schlauchförmige Form aufweisende Fasermaterial eingearbeitet wird, indem der plastifizierte Schlauch von innen gegen das von außen abgestützte Fasermaterial gedrückt wird.

21. Verfahren nach einem der Ansprüche 17 - 20,
d a d u r c h   g e k e n n z e i c h n e t,
daß das Umwickeln in mehreren Lagen erfolgt.

22. Verfahren nach einem der Ansprüche 1 - 21,
d a d u r c h   g e k e n n z e i c h n e t,
daß zwischen der Korrosionsschutzbeschichtung und der Beschichtung aus dem hochelastischen vernetzten Kunststoff oder Kautschuk zusätzlich eine Schicht aus einem geschlossenzelligen geschäumten Kunststoff oder Kautschuk aufgetragen wird.

23. Verfahren nach Anspruch 22,
d a d u r c h   g e k e n n z e i c h n e t,
daß in den geschlossenen Zellen ein Korrosionsschutzgas (z.B. aus Nitriten oder Carbamaten) steht, welches beim Bruch einer Zellenwand eine zusätzliche Korrosionsschutzwirkung ausübt.